# EUROPEAN PATENT SPECIFICATION

(11) **EP 0 460 791 B1**
(45) Date of publication and mention of the grant of the patent: **01.06.1994**
(21) Application number: 91302467.5
(22) Date of filing: 21.03.1991
(51) Int. Cl.: F16L 33/22

(54) **Pipe joint with pipe slipout prevention means**
Rohrkupplung mit Verriegelungsorganen
Raccord pour tuyaux avec moyens pour prévenir le désengagement

(30) Priority: 07.06.1990 JP 150240/90; 07.06.1990 JP 150241/90
(43) Date of publication of application: 11.12.1991
(73) Proprietor: NITTA MOORE COMPANY, Chuo-ku, Osaka (JP)
(72) Inventor: Shimada, Haruki, Takaichi-gun, Naka-ken (JP); Fukushima, Kazuhiro, Nabari-shi, Mie-ken (JP)
(74) Representative: Linn, Samuel Jonathan

(56) References cited:
- EP-A- 0 310 234
- FR-A- 2 398 958

## Description

The present invention relates to a pipe joint for connecting pipes for throughflow of fluid (liquid or gas) and more specifically to a pipe slipout prevention means therefor.

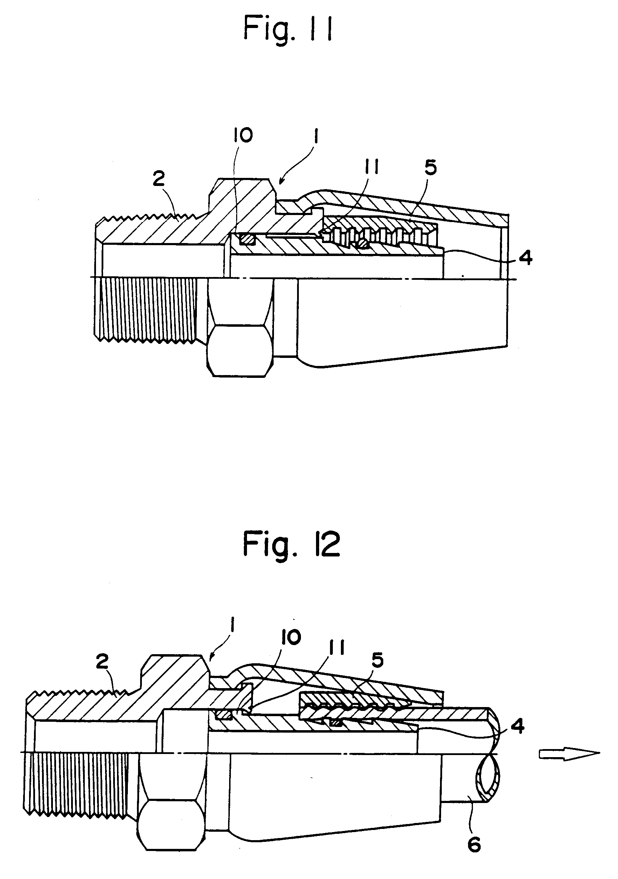

Hitherto, as shown in Figs. 11 and 12, pipe joints have been known in which an insert 4 moves back and forth within a specific range inside a main body 1. To prevent the pipe slipping out on the one hand, a rear end of the insert 4, ie. an end to opposite a pipe insertion port, is to be abutted against a stepped part of a nipple 2, while a projection 10 formed at the rear end of the insert 4 is to be abutted against a protruding lip 11 formed at an inner front end of the nipple 2. In other words, the insert 4 is only slidable between these two limiting abutments.

In such a known joint, however, the protruding lip 11 has to be formed in the nipple 2 after fitting the insert 4 therein, and this can be rather difficult.

Moreover, as shown in the drawings, the known joint has a collet 5 in its main body 1 and the collet 5 should tighten around a pipe 6 connected to the insert 4 to prevent the pipe 6 slipping out when a pulling force is applied thereto in a slipout direction, ie. a direction toward the pipe insertion port.

However, if the collet 5 fails to move or does not move far enough in the slipout direction, the tightening force of the collet 5 may be insufficient to prevent the connected pipe 6 from slipping out.

It is a primary object of the present invention to provide a pipe joint capable of being easily fabricated, and which specifically need not have a protruding lip 11 which is difficult to manufacture, yet still includes a slipout preventive mechanism for the pipe connection insert.

It is another object of the invention to provide a pipe slipout prevention means in a pipe joint which has a collet for tightening around a pipe to prevent it from slipping out, wherein, when the pipe is pulled in the slipout direction, the collet also reliably moves in the same direction, tightens around the pipe to prevent it slipping out and thereby maintains the connection securely.

FR-A-2398958 discloses a pipe joint having a main body formed by coupling a nipple and a socket, and further comprising an insert, slidably installed in the nipple, on which a pipe to be connected can be fitted externally, and a collet located inside the socket around the insert with a spacing therebetween, for securing the pipe externally, the socket having a tapered inner surface diminishing in diameter toward a pipe insertion port, with which the collet co-operates in use to tighten engagement of the pipe. In that pipe joint a stopping member in the form of an integral radial flange on the outside of the insert is provided for urging the collet towards the pipe insertion port upon movement of the insert in that direction and for preventing inadvertent removal of the insert from the socket by engagement with the collet. Removal of the collet from the socket is prevented by abutment of the collet against a shoulder formed on the inner surface of a the socket by an inward projection thereof.

The present invention is distinguished therefrom in that the tapered inner surface constantly and continuously diminishes in diameter right up to the pipe insertion port and a stopping member is provided on the outside of the insert and is adapted to abut, in a direction opposite to the pipe insertion port, against a shoulder formed on the insert, said stopping member also being adapted to urge the collet towards the pipe insertion port upon movement of the insert in that direction thereby to prevent inadvertent removal of the insert from the socket by engagement with the collet or by abutment against the tapered surface of the socket and/or to securely engage the collet with the pipe.

In some embodiments the outside diameter of the stopping member may be smaller than that of the collet. On the other hand, the outside diameter of the stopping member may be equal to or larger than that of the collet.

In some embodiments, the stopping member may conveniently be formed separately from the collet. However, in some cases the stopping member together with the collet may be formed as one body.

The operation of the slipout prevention means of the pipe joint of the present invention is as follows:

Whenever a pipe connected to the pipe joint is pulled in the slipout direction, the stopping member engages with and is prevented from moving any further in the slipout direction by a tapered part of the socket. This constitutes joint slipout prevention means. Since there is no requirement for a protruding lip in the nipple as is required in some presently known pipe joints of their type, this difficult fabrication step can be avoided.

Since the stopping member which urges the collet in the pipe slipout direction is disposed on the outside of the insert, at about the middle thereof, when the pipe moves in the slipout direction, the insert moves as well, in unison and the movement of the insert is transmitted to the collet through the stopping member. This causes the collet to move in the same direction as the pipe moves and apply a tightening force around the pipe, so that the collet reliably functions as a pipe slipout preventive mechanism.

Other advantages of the present invention may become apparent in the following description referring to the accompanying drawings, in which:
Fig. 1 is a partial longitudinal sectional view of a first embodiment of a pipe joint of the invention wherein an outside diameter of a stopping member is smaller than that of a collet;
Fig. 2 is a similar view illustrating the same pipe joint after connection of a pipe thereto;
Fig. 3 is a partial longitudinal sectional view of another embodiment of pipe joint which has a stopping member of larger outside diameter that a collet;
Fig. 4 is a similar view illustrating the same pipe joint as Fig. 3 after connection of a pipe thereto;
Fig. 5 is a partial longitudinal sectional view of a third embodiment of a pipe joint of the invention having a pipe slipout preventive mechanism;
Fig. 6 is a similar view illustrating the same pipe joint as Fig. 5 after connection of a pipe thereto;
Fig. 7 is a partial longitudinal sectional view of a fourth embodiment of a pipe joint of the invention wherein an outside diameter of a stopping member is larger than that of a collet;
Fig. 8 is a similar view illustrating the same pipe point as Fig. 7 after connection of a pipe thereto;
Fig. 9 is a partial longitudinal sectional view of a fifth embodiment of pipe joint in accordance with the invention in which a stopping member is formed integrally with a collet;
Fig. 10 is a similar view illustrating the same pipe joint as in Fig. 9 after connection of a pipe thereto;
Fig. 11 is a partial longitudinal sectional view of a conventional pipe joint;
Fig. 12 is a similar view illustrating the conventional pipe joint after connecting a pipe thereto, and
Fig. 13 is a perspective view of a collet of the embodiments of Figs. 1 to 8.

Referring to the drawings, some embodiments of the present invention will now be described in detail.

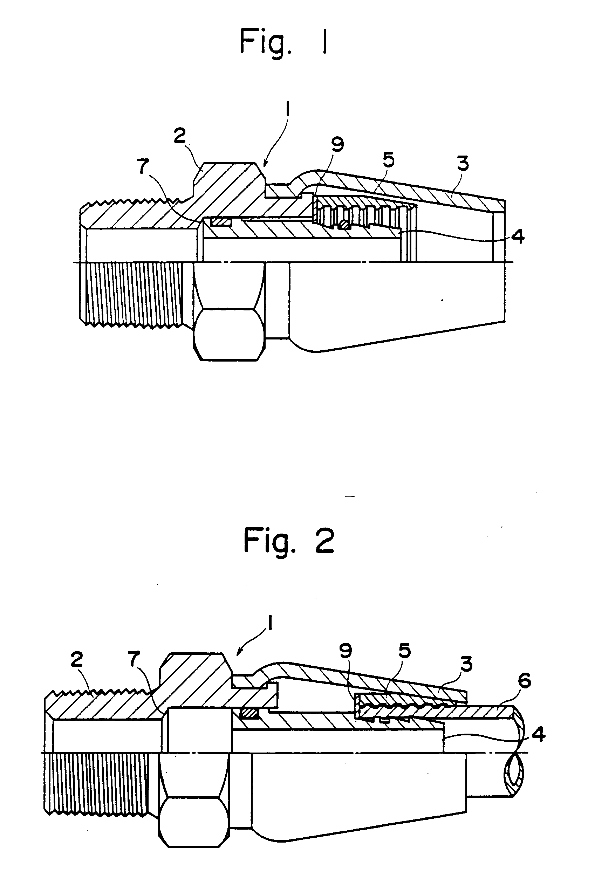

First of all, Figs. 1 to 4 and Fig. 13 show embodiments wherein the pipe joint comprises a main body formed by coupling a nipple 2 and a socket 3, with an insert 4 slidably installed in the nipple 2, and a collet 5 installed outside the insert 4 with a predetermined spacing therebetween.

When connecting a pipe 6 to the pipe joint, the insert 4 is inserted into an end of the pipe 6 and the rear end of the insert 4, ie. the end opposite to that connecting to the pipe 6, abuts against a stepped part 7 of the nipple 2, which prevents the insert 4 from moving further backwards.

When the pipe 6 is fitted in the insert 4, the collet 5 is located outside the pipe 6, ie. the pipe 6 is inserted into the spacing between the insert 4 and the collet 5.

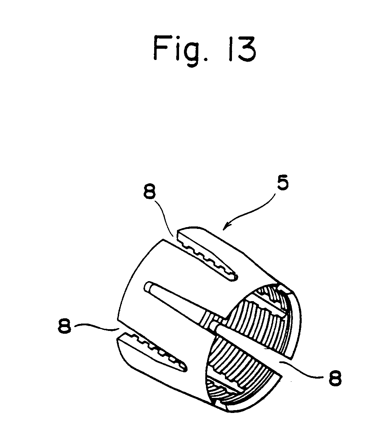

As shown in Fig. 13 the collet 5 is formed with a plurality of longitudinal slits 8 which are alternately open to one end and the other end thereby making the collet 5 elastic inwardly and outwardly in a radial direction.

When the pipe 6 is connected to the pipe joint and pulled back again in the slipout direction, ie. outwardly of the pipe insertion port, the collet 5 also moves in that direction together with the insert 4. Since the inner surface of the socket 3 has a tapered section diminishing in diameter toward the pipe insertion port, the collet 5 engages with this tapering section and is itself deformed, becoming smaller in diameter and tightening its grip around the pipe 6, thereby preventing the pipe 6 from slipping out.

A stopping member 9 projects from the outside of the insert 4 and is shaped to engage with and stop at the tapered part of the socket 3.

The stopping member 9 therefore limits the movement of the insert 4 toward the pipe insertion port. When the pipe 6 is not connected this prevents the insert 4 from slipping out.

When the insert 4 moves in the slipout direction, the stopping member 9 also moves together with it. Furthermore, the stopping member 9 is fixed to the inner end (opposite to the insertion port) of the collet 5, so when the pipe 6 moves in the slipout direction, all three components, namely the insert 4, the stopping member 9 and the collet 5 start moving in the same direction together with the pipe 6.

When the pipe 6 is connected, the collet 5 firstly contacts the tapering internal surface of the socket 3, decreases in diameter and slightly tightens its grip around the pipe. Then the stopping member 9 contacts the tapered surface and prevents further movement toward to port.

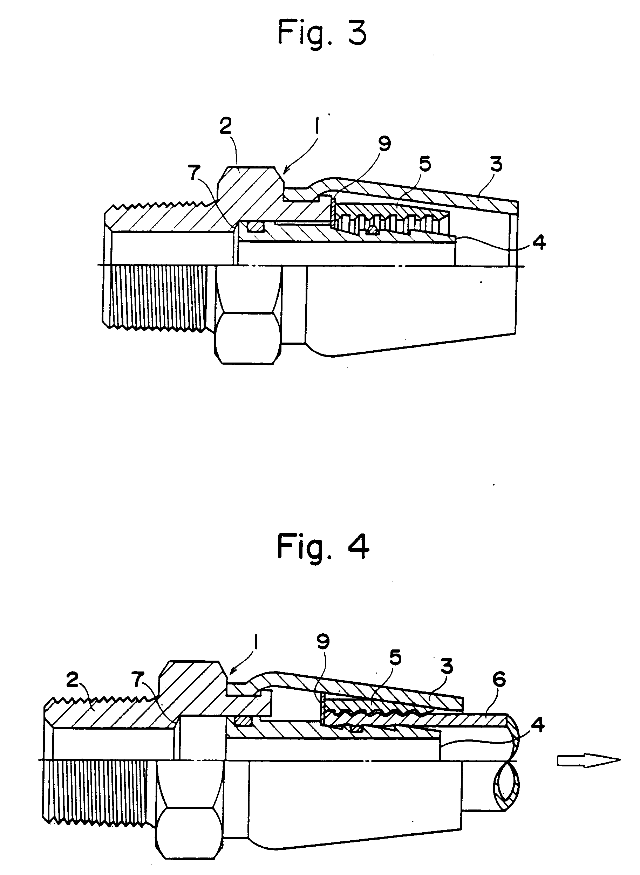

The outer diameter of the stopping member 9 may be either smaller than that of the collect 5, as shown in Figs. 1 and 2, or larger than that of the collet 5, as shown in Figs. 3 and 4. It may, of course, be equal to that of collet 5.

In the case of the stopping member 9 with a smaller outer diameter than that of the collet 5, when the insert 4 and the associated parts move in the slipout direction and the outside diameter of the collet 5 has decreased by deformation until it is smaller than that of the stopping member 9, as shown in Fig. 2, the stopping member 9 engages with and stops at the tapered part of the socket 3, thereby functioning as a pipe slipout preventive mechanism.

In the case where the stopping member 9 has an outer diameter which is equal to or larger than the outer diameter of the collet 5, when the insert 4 and the associated parts move in the slipout direction, as shown in Fig. 4, the stopping member 9 engages with and stops at the tapered part of socket 3, thereby preventing the pipe from slipping out.

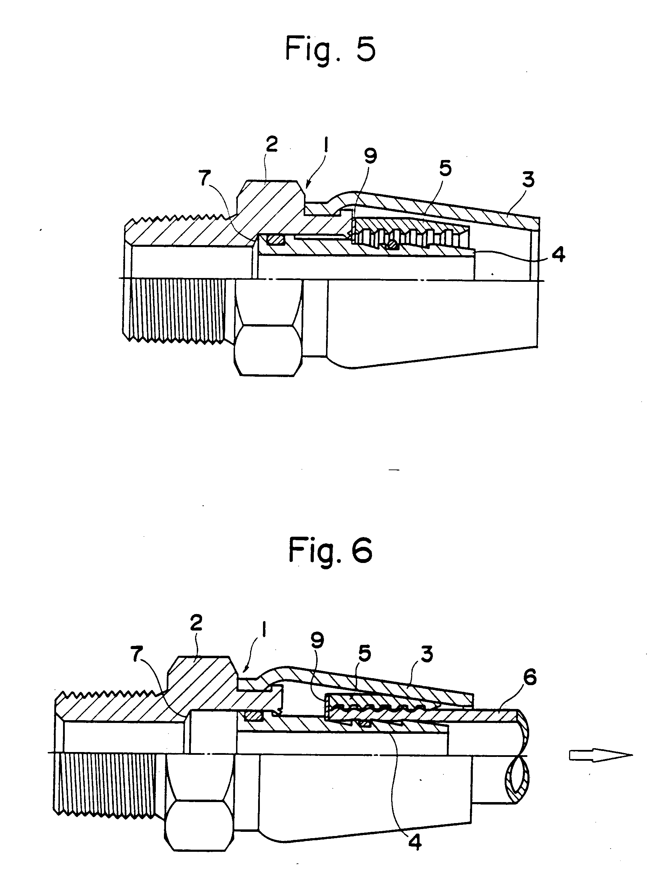

In the embodiments shown in Figs. 5 to 8 and Fig. 13, the pipe joint again comprises a main body 1 formed by coupling a nipple 2 and a socket 3, with an insert 4 fitted to the inside of the nipple 2, and a collet 5 installed outside the insert 4 with a spacing therebetween. The general manner of operation of the parts for secure connection of the end of a pipe 6 is the same as in the previous embodiments and need not be repeated.

Again, a stopping member 9 for pressing the collet 5 in the pipe slipout direction is provided on the outside of the insert 4 positioned approximately at its middle when considered axially. This avoids a problem which might otherwise arise in that if the grip of the collet 5 on the pipe 6 is loose, the collet 5 may not move in the slipout direction together with the pipe 6 and the tightening force of the collet 5 may then not take effect.

The stopping member 9 again projects from the outside of insert 4, and is designed to move together with the insert 4, when the insert 4 moves in the slipout direction. In addition, in these embodiments this stopping member 9 is designed merely to abut against the inner end of the collet 5, so when the pipe 6 moves in the slipout direction, all of them, ie. the insert 4, the stopping member 9 and the collet 5, start moving in the same direction together with the pipe 6.

After contact with the tapered surface, the collet 5 begins to get smaller in diameter and thereby tightens its grip on the pipe 6 while preventing further movement in the slipout direction, and preventing the pipe 6 from slipping out.

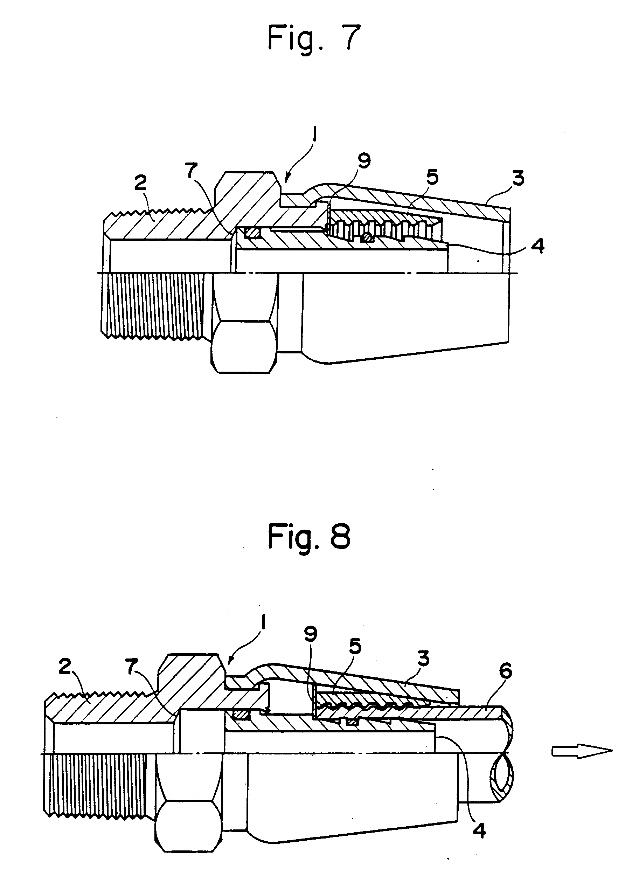

As mentioned, Figs. 5 to 8 show embodiments in which the stopping member 9 is separately formed from the collet 5. More specifically in Figs. 7 and 8, the outside diameter of the stopping member 9 is larger than that of collet 5. In this respect it is designed so that the pipe does not move in the slipout direction more than necessary by means of engagement of the stopping member 9 with the inner surface of the socket 3.

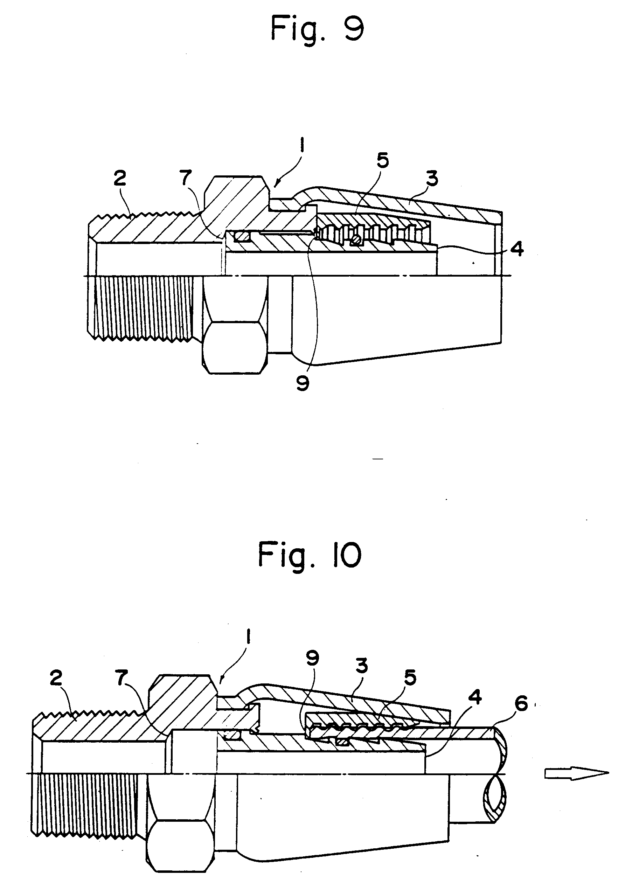

Figs. 9 and 10 illustrate an embodiment which is the same in other respects, but in which the stopping member 9 and the collet 5 are formed into one body. In this respect, the collet 5 has a flange at its inner end which constitutes the stopping member 9, the flange being formed in the radially inward direction. The stopping member 9 is then engaged by a shoulder formed on the insert 4.

The pipe slipout prevention means provided, in accordance with the invention, has a simple structure of stopping member and is simple to produce. It does not require formation of a conventional protruding lip 11 within the nipple 2, which is a troublesome fabricating step in a conventional pipe joint. However, a stopping member can still be used with advantage in cases where such a lip 11 is already provided (see Figs, 5 to 10).

With the proposed structure, as described in various forms above, when a force in the slipout direction is applied to the pipe 6, movement of the pipe 6 in the slipout direction causes the collet 5 to move together with the stopping member 9 and the insert 4. Accordingly, the pipe slipout prevention means acts reliably on the collet 5, so that slipout prevention is guaranteed.

## Claims

1. A pipe joint having a main body (1) formed by coupling a nipple (2) and a socket (3) and further comprising an insert (4), slidably installed in the nipple (2), on which a pipe (6) to be connected can be fitted externally, and a collet (5) located inside the socket (3) around the insert (4) with a spacing therebetween, for securing the pipe (6) externally, the socket (3) having a tapered inner surface diminishing in diameter toward a pipe insertion port, with which the collet (5) co-operates in use to tighten engagement of the pipe (6), characterised in that the tapered inner surface constantly and continuously diminishes in diameter right up to the pipe insertion port and a stopping member (9) is provided on the outside of the insert (4) and is adapted to abut, in a direction opposite to the pipe insertion port, against a shoulder, formed on the insert (4), said stopping member (9) also being adapted to urge the collet (5) towards the pipe insertion port upon movement of the insert in that direction thereby to prevent inadvertent removal of the insert (4) from the socket (3) by engagement with the collet (5) or by abutment against the tapered surface of the socket (3) and to securely engage the collet (5) with the pipe (6).

2. A pipe joint according to Claim 1, wherein an outside diameter of the stopping member (9) is smaller than that of the collet (5).

3. A pipe joint according to Claim 1, wherein an outside diameter of the stopping member (9) is equal to or larger than that of the collet (5).

4. A pipe joint according to any preceding claim, wherein the stopping member (9) is formed separately from the collet (5).

5. A pipe joint according to any of Claims 1 to 3, wherein the stopping member (9) and the collet (5) are integrally formed in one piece.

6. A pipe joint according to any of claims 1 to 3, wherein the stopping member (9) is fixed to the collet (5).

## Patentansprüche

1. Rohrkupplung mit einem Hauptkörper (1), der durch Koppeln eines Nippels (2) und einer Buchse (3) gebildet ist und weiters einen gleitbar in den Nippel (2) eingesetzten Einsatz (4) umfaßt, auf dem ein anzuschließendes Rohr (6) außen angeordnet werden kann, sowie eine Hülse (5), die innerhalb der Buchse (3) um den Einsatz (4) herum mit einem Abstand dazwischen angeordnet ist, um das Rohr (6) von außen zu befestigen, wobei die Buchse (3) eine sich verjüngende Innenfläche aufweist, deren Durchmesser sich zu einer Rohreinschuböffnung hin verringert und mit der die Hülse (5) im Gebrauch zusammenwirkt, um den Halt des Rohrs (6) zu festigen, dadurch gekennzeichnet, daß sich der Durchmesser der sich verjüngenden Innenfläche konstant und kontinuierlich bis zur Rohreinschuböffnung verringert und ein Stoppelement (9) an der Außenseite des Einsatzes (4) vorgesehen und so ausgebildet ist, daß es in der zur Rohreinschuböffnung entgegengesetzten Richtung an einer auf dem Einsatz (4) ausgebildeten Schulter anstößt, wobei das genannte Stoppelement (9) auch dazu ausgebildet ist, die Hülse (5) bei Bewegung des Einsatzes in diese Richtung zur Rohreinschuböffnung hin zu drängen, um dadurch das versehentliche Entfernen des Einsatzes (4) aus der Buchse (3) durch Angreifen an der Hülse (5) oder durch Anstoßen an die sich verjüngende Oberfläche der Buchse (3) zu verhindern und die Hülse (5) sicher am Rohr (6) in Angriff zu bringen.

2. Rohrkupplung nach Anspruch 1, worin ein Außendurchmesser des Stoppelements (9) kleiner ist als jener der Hülse (5).

3. Rohrkupplung nach Anspruch 1, worin ein Außendurchmesser des Stoppelements (9) gleich groß wie oder größer als jener der Hülse (5) ist.

4. Rohrkupplung nach einem der vorhergehenden Ansprüche, worin das Stoppelement (9) getrennt von der Hülse (5) ausgebildet ist.

5. Rohrkupplung nach einem der Ansprüche 1 bis 3, worin das Stoppelement (9) und die Hülse (5) integral einstückig ausgebildet sind.

6. Rohrkupplung nach einem der Ansprüche 1 bis 3, worin das Stoppelement (9) an der Hülse (5) befestigt ist.

## Revendications

1. Raccord pour tuyau présentant un corps principal (1) formé en accouplant un manchon fileté (2) et une douille (3) et comprenant en outre un insert (4), installé de façon coulissante dans le manchon fileté (2), sur lequel un tuyau (6) à raccorder peut être adapté extérieurement, et un collet (5) positionné à l'intérieur de la douille (3) autour de l'insert (4) avec un espacement entre ceux-ci, pour fixer le tuyau (6) extérieurement, la douille (3) présentant une surface interne effilée dont le diamètre diminue vers l'orifice d'insertion du tuyau, avec laquelle le collet (5) coopère en cours d'utilisation pour resserrer la prise sur le tuyau (6), caractérisé en ce que le diamètre de la surface interne effilée diminue constamment et continuellement jusqu'à l'orifice d'insertion du tuyau, et qu'un élément d'arrêt (9) est prévu sur l'extérieur de l'insert (4) et est apte à buter, suivant une direction opposée à l'orifice d'insertion du tuyau, contre un épaulement, formé sur l'insert (4), ledit élément d'arrêt (9) étant également apte à solliciter le collet (5) vers l'orifice d'insertion du tuyau lors d'un déplacement de l'insert dans cette direction en empêchant ainsi un retrait par inadvertance de l'insert (4) de la douille (3) par la mise en prise avec le collet (5) ou par la butée contre la surface effilée de la douille (3), et pour mettre fermement en prise le collet (5) avec le tuyau (6).

2. Raccord pour tuyau selon la revendication 1, dans lequel un diamètre externe de l'élément d'arrêt (9) est plus petit que celui du collet (5).

3. Raccord pour tuyau selon la revendication 1, dans lequel un diamètre externe de l'élément d'arrêt (9) est égal à ou plus grand que celui du collet (5).

4. Raccord pour tuyau selon l'une des revendications précédentes, dans lequel l'élément d'arrêt (9) est formé séparément du collet (5).

5. Raccord pour tuyau selon l'une des revendications 1 à 3, dans lequel l'élément d'arrêt (9) et le collet (5) sont formés intégralement en une pièce.

6. Raccord pour tuyau selon l'une des revendications 1 à 3, dans lequel l'élément d'arrêt (9) est fixé au collet (5).
